# EUROPEAN PATENT SPECIFICATION

(11) **EP 2 342 097 B1**
(45) Date of publication and mention of the grant of the patent: **06.01.2016**
(21) Application number: 09744796.5
(22) Date of filing: 29.09.2009
(51) Int. Cl.: B60Q 1/00

(54) **MOTOR VEHICLE LIGHT COVER**
LAMPENABDECKUNG FÜR KRAFTFAHRZEUG
PROTÈGE-PHARE DE VÉHICULE À MOTEUR

(30) Priority: 04.11.2008 SI 200800269
(43) Date of publication of application: 13.07.2011
(73) Proprietor: Hella Saturnus Slovenija, Proizvodnja svetlobne opreme za motorna in druga vozila, d.o.o., 1000 Ljubljana (SI)
(72) Inventor: SOSIC, Jaka, 1000 Ljubljana (SI)
(74) Representative: Borstar, Dusan
(86) International application number: PCT/SI2009/000040
(87) International publication number: WO 2010/053458

(56) References cited:
- US-A- 3 688 103
- US-A- 5 722 768
- US-B1- 6 454 450

## Description

The present invention relates to a motor vehicle light cover. According to the International Patent Classification, such inventions belong to the field of vehicles and transport, namely to lightning equipment for vehicles, in particular to protection of lights against moisture or impurities.

The purpose of the invention is to create a simple and uniform vehicle light cover, which could be reliably mounted on each disposable vehicle casing by means of simply rotating thereof relatively to each light casing either by hand or by means of appropriate hand-operated tool, in particular a screwdriver, even if the cover is located in a difficultly accessible area of the motor vehicle.

In motor vehicles, each light is normally furnished with a passage, which is usually available on the rear wall of the light and which allows accessing the interior of the light, e.g. for the purposes of replacing the bulb or the like. During the use, such passage is normally blinded by means of a suitable cover, by which the interior is then protected against the moisture or impurities. For such purposes, the cover is normally furnished with a suitable sealing member and is on the one hand by means of suitable attaching means pressed towards the light casing, and on the other hands secured against undesired removal, which on the contrary could occur during the use due to vibrations and other impacts.

Such cover may be attached onto each light casing in different manners. One of possible approaches (EP 0 970 847 A1) provides clamps, wherein a required positioning and managing two or three clamps along the circumference of the light may be pretty complicated from a quite technical point of view, and wherein moreover essential problems may also occur due to lack of space around the light, which makes accessing said clamps quite difficult.

The second approach in respect of attaching such cover to each disposable light casing is described in S1 21417, where the cover is furnished with arresting means, and each arresting means is furnished with two inclined surfaces, by means of which the arresting means is slid over the internal edge of the passage within the light casing, and remains arrested there behind.

The third approach requires a rotation of the cover around its longitudinal axis, which also correspond to the axis of the passage within the light casing, by which the casing and the cover are generally connectable to each other either by means of appropriate thread or by means of bayonet assembly. Such approach is however possible only in such cases, when the passage and the cover are circular.

Interconnection of such cover and each corresponding light casing by means of a thread is sufficiently reliable, but manufacturing thereof is pretty comprehensive and costly, by which also the mounting or removal the cover due to required matching of both threads on the cover and the casing is usually pretty difficult and is in combination with a relatively extensive rotation in the conditions of lacking the space for an average user very problematic. The sealing efficiency between the cover and the casing normally depends on that, whether the cover is sufficiently screwed or not. Sufficiently screwing in the practice depends on a quite personal perception, and the required effect is difficult to be expected from each average user. Consequently, after the first replacement of the bulb, such sealing and herewith each protection against the moisture and impurities is doubtful. In particular, since removing and mounting of the cover according to the prior art is performed by hand, by which the user must grip the cover and rotate it in one or another direction.

An alternative approach regarding said attaching or removal of the cover by means of a thread in combination with rotation around the longitudinal axis of the light is a so-called bayonet joint. For such purposes, a ring-like flange is foreseen along the circumference of said passage on the casing, onto which the front surface of the cover together with each disposable seal is then rest. The cover is furnished in the area of its front surface with radially outwards extending and equidistantly along the circumference arranged protrusions, which may upon rotation of the cover around its central axis be inserted into complementary recesses, which are also equidistantly arranged along the circumference of the cover. In such case such rotation is sufficient for placing or removal the cover, that each protrusion is allowed to enter into each corresponding recess, or to be removed there-from, respectively. Such rotation is normally achieved by hand, where each user needs to grip the cover and rotate it at certain angle around its central axis. In such context, such placing or removal of the cover seems to be simple. It should however be taken into account that for the purposes of sealing and securing against undesired removal, the cover must be tightly pressed towards the casing, so that in the interior of each radial protrusion, or in the interior of each corresponding recess, an inclined surface is foreseen and/or a corresponding arresting means. Upon a long-term use it may happen that a relatively high torque needs to be assured for the purposes of removing the cover. By taking into account that at least in certain types of vehicles the cover is difficultly accessible and that the user needs to reach among various other parts positioned cover and to rotate it thereupon around its axis, then from the point of view of an average user such operation is quite complicated and is sometimes not feasible. Quite analogously, also each placing of such cover followed by rotation thereof for each required angle for the purposes of sealing may also be very complicated or even impossible.

US 3,668,103 discloses a vehicle headlight or a searchlight, which comprises a housing with open front side, where an optical unit is inserted, which consists of a reflector and of a bulb mounted in appropriate socket, while the front opening of said housing is closed by means of a lens. The closed rear side of said housing is furnished with a recess, into which an actuating element is inserted. Said actuating element consists of a cylindrical pin portion, which is preferably a rivet and extends essentially in a direction of the longitudinal axis of the light, an outer portion, which is accommodated to the exterior contour of the light housing, as well as of an inner part, which is preferably a leaf spring having two oppositely protruding ends, which arc adapted to be pressed towards the internal surface of the light housing. The contour of said recess in the rear wall of the housing is adjusted for the purposes of inserting or removing said end portions of the inner part, when said inner part is appropriately rotated around the central axis of the pin portion. If the light is large, then the pressure exccrted by said spring must be very significant and then may not be possible to turn the actuating element by hand. In such case it is advantageous to provide the outer portion of the actuating element with suitable engaging means - such as projections, recesses, facets or the like - or in the form of a slot, bores or similar possibilities, with which a tool can cooperate for effecting the necessary turning. The aforementioned actuating element is deemed to function as light cover. To this aim, the cover must be furnished with a specially designed recess on the rear wall, which is for example furnished with two parallel flat facets at two diametrally opposite sides. The actuating element obviously consists of three parts, of which the inner part and also the outer part must be adjusted to each particular light housing. The inner part must be made of spring steel, while the pin portion and/or the outer part may consist of plastic. The inner part is rotated by means of the outer part via the pin portion. In normal circumstances, e.g. when dimensions of the light are relatively small, the outer part can be rotated by hand. Only when the dimensions of the light are large and rotation of the inner part by means of the outer part becomes impossible, the outer portion of the actuating element is provided with suitable engaging means like projections, recesses, facets, bores or with a slot, with which a tool can cooperate. US 3,668,103 is dealing exclusively with achieving a sufficient torque with respect to overcoming friction due to the pressure between the inner portion of the actuating element and the inner wall of the light housing, but at the same time it is completely silent with respect to any practical arrangement of said suitable engaging means with respect to accessibility of the cover by lack of space in the adjacency of the light.

A lamp is disclosed in US 5,722,768, where a discharge bulb is utilized as a light source and the size of which is reduced. Such lamp includes a casing, which is on its front side furnished with a lens and on its rear side with an opening for accessing the bulb or other electric components placed within said casing. A circular saucer-like cover is removably attached to the opening. Said cover is formed integrally with ribs, which are arranged at a plurality of positions over the outer circumference of said opening. Thanks to said ribs, turning the cover by hand is no doubt easily and more reliable than e.g. turning a cover with smoothly shaped surface without ribs. However, in order to enable satisfactory attachment of such cover e.g. for the purposes of sealing and protection of the interior of the casing against moisture or dust, a sufficient torque must be available by turning the cover. The same applies, when the cover is tightly attached onto each disposable casing, and must be removed e.g. for the purposes of replacing the bulb or the like. Many users are of various reasons unable to produce by hand a sufficient torque required by placing the cover onto the casing in appropriate manner or also by removing it from the casing. In addition, the space available for accessing the cover may also be pretty limited due to the presence of neighboring machine parts. In such situations, each user might generally use certain tools like pliers or a combination of a pin and hammer or a screwdriver and a hammer, but this would then lead to serious damages on ribs and cover as such, upon which in addition to the bulb also the cover would have to be replaced.

The present invention refers to a motor vehicle light cover, comprising at least approximately cylindrical and preferably with respect to the longitudinal axis of the cover symmetrically shaped casing having an open end, which is surrounded with a flange and comprising appropriate attaching means, which are intended for establishing a detachable interconnection between the cover and a corresponding light casing on the basis of appropriate rotation of the cover around its longitudinal axis in one or another direction, while on the opposite end it is blinded by a front wall..

According to the invention, a plurality of recesses is available on the casing, each of them per se extending at least approximately in the radial direction and said recesses are equidistantly spaced apart from each other in a circumferential direction and are moreover adapted to receive a stick-shaped portion of each appropriate hand-operated tool. Said recesses are preferably foreseen in the area of the front wall of the casing and are preferably available in the form of grooves, which coincide in the central area of the front wall of the cover. In the preferred embodiment, the profiles i.e. the cross-section said recesses are adapted for cooperation with a stick-shaped portion of a hand-operated tool, which is a screwdriver.

An embodiment of the invention will be described in more detail on the basis of the attached drawings, where
- Fig. 1: is a perspective view of a motor vehicle light cover;
- Fig. 2: shows said light cover by placing thereof by means of a screwdriver; and
- Fig. 3: shows a light cover either by placing thereof, or by removing thereof from a light, which is mounted in a motor vehicle.

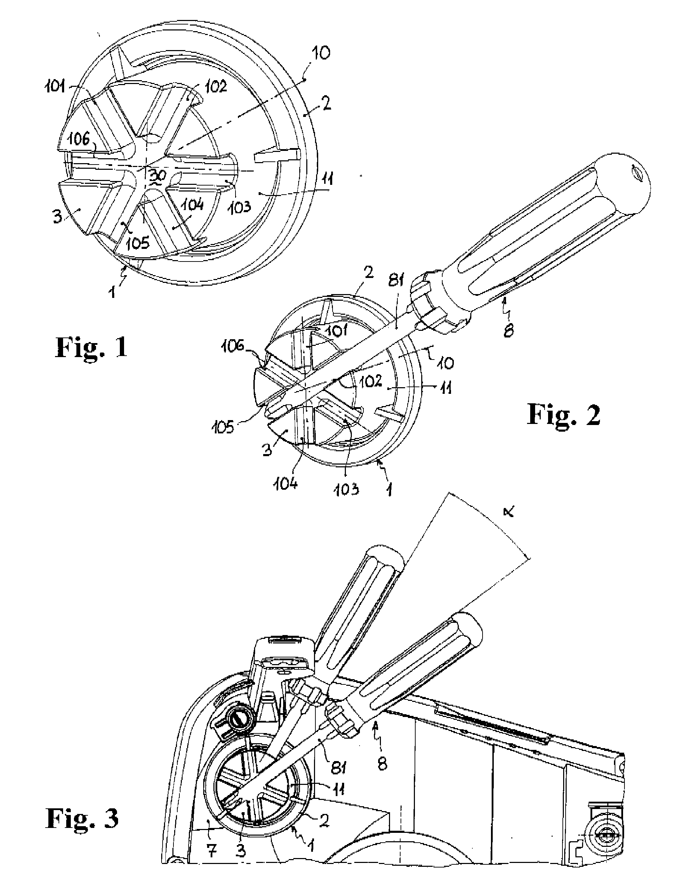

A motor vehicle light cover 1 according to the invention (Fig. 1) consists of at least approximately cylindrical casing 11, which is in this particular case shaped symmetrically with respect to the longitudinal axis 10, and is open on the one end 12 and surrounded with a flange 2, while on the opposite end 13 it is blinded by means of a front wall 3.

Although not shown in the drawing, appropriate attaching means are foreseen in the area of said flange 2, by means of which the cover 1 is attached to each disposable motor vehicle light casing 7 (Fig. 3), namely by means of appropriate rotation α of the cover 1 around the longitudinal axis 10 thereof. Those skilled in the art should understand that said attaching means may either be available as appropriate members of a bayonet joint formed both on the cover 1 and on the light casing 7, or also a thread formed both on the cover 1 and on the light casing 7.

According to the invention, said casing 11 is at least in the area of the front wall 3 of the cover 1, furnished with a plurality of each per se at least approximately in radial direction extending recesses 101, 102, 203, 104, 105, 106, which are equidistantly spaced from each other in a circumferential direction and are moreover adapted to receive a stick-like portion 81 of each appropriate hand-operated tool 8 (Fig. 2).

In the shown embodiment, said radial recesses 101, 102, 203, 104, 105, 106 are available in the form of radial grooves on the front wall 3 of the casing 11, which coincide in the central area 30 of said front wall 3. In this particular case (Fig, 2) said hand tool 8 is a classic screwdriver.

When placing the cover 1 onto the light casing 7 or also by removing it there-from, each user may still use his hand like in the past, but according to the invention a further possibility is given to him, so that in addition to that he is also able to use a hand tool 8, for example a screwdriver. Whenever the cover 1 is either difficultly accessible or when each required rotation α thereof around the axis 10 in one or another direction may be achieved only by means of a relatively high torque, then the user may always decide to insert a stick-shaped part of each disposable hand-operated tool 8 into at least one recess 101, 102, 203, 104, 105, 106, and preferably into two diametrically opposite recesses 101, 102, 203, 104, 105, 106.

## Claims

1. Motor vehicle light cover (1), comprising at least approximately cylindrical and preferably with respect to the longitudinal axis (10) of the cover (1) symmetrically shaped casing (11) having an open end (12) surrounded with a flange (2) with appropriate attaching means, which are intended for establishing a detachable interconnection between the cover (1) and a corresponding light casing (7) on the basis of appropriate rotation (α) of the cover (1) around its longitudinal axis (10) in one or another direction, while on the opposite end (13) said cover (1) is blinded by a front wall (3), **characterized in that** a plurality of recesses (101, 102, 203, 104, 105, 106) in the form of grooves is available on the front wall (3) of the casing (11) of the cover (1), wherein each of said recesses (101, 102, 203, 104, 105, 106) extends at least approximately in the radial direction of said front wall (3) and the profile i.e. the cross-section of each recesses (101, 102, 203, 104, 105, 106) is adapted to receive a stick-shaped portion (81) of a screwdriver or similar hand-operated tool (8), and wherein said recesses (101, 102, 203, 104, 105, 106) are equidistantly spaced apart from each other in a circumferential direction of said casing (11) and coincide in the central area (30) of the front wall (3) of the cover (11).

## Patentansprüche

1. Lampenabdeckung (1) für Kraftfahrzeug, welche ein zumindest annähernd zylindrisches und vorzugsweise im Hinblick auf die Längsachse (10) der Abdeckung (1) symmetrisch geformtes Gehäuse (11) mit einem von einem Flansch (2) mit passenden Befestigungsmitteln umgebenen offenen Ende (12) aufweist, welche zur Herstellung einer lösbaren Verbindung zwischen der Abdeckung (1) und einem entsprechenden Lampengehäuse (7) aufgrund einer geeigneten Drehung (α) der Abdeckung (1) um ihre Längsachse (10) in der einen oder anderen Richtung gedacht sind, während am entgegengesetzten Ende (13) die Abdeckung (1) mittels einer Vorderwand (3) verblendet ist, **dadurch gekennzeichnet, dass** eine Vielzahl von Ausnehmungen (101, 102, 103, 104, 105, 106) in Form von Nuten an der Vorderwand (3) des Gehäuses (11) der Abdeckung (1) vorhanden ist, wobei jede der Ausnehmungen (101, 102, 103, 104, 105, 106) zumindest annähernd in radialer Richtung zur Vorderwand (3) verläuft und das Profil, d. h. der Querschnitt jeder der Ausnehmungen (101, 102, 103, 104, 105, 106) ausgestaltet ist, um einen stabförmigen Abschnitt (81) eines Schraubenziehers oder ähnlichen handbetätigten Werkzeugs (8) aufzunehmen, und wobei sich die Ausnehmungen (101, 102, 103, 104, 105, 106) im gleichen Abstand zueinander in einer Umtangsrichtung des Gehäuses (11) befinden und im Mittelbereich (30) der Vorderwand (3) der Abdeckung (11) zusammentreffen.

## Revendications

1. Protège-phare de véhicule à moteur (1), comprenant au moins un logement (11) approximativement cylindrique et façonné de préférence de manière symétrique par rapport à l'axe longitudinal (10) du protège-phare (1) ayant une extrémité ouverte (12) entourée par une bride (2) avec des moyens de fixation appropriés, qui sont destinés à établir une interconnexion détachable entre le protège-phare (1) et un logement de phare (7) correspondant sur la base d'une rotation appropriée (α) du protège-phare (1) autour de son axe longitudinal (10) dans une direction ou une autre, tandis que sur l'extrémité opposée (13) ledit protège-phare (1) est masqué par une paroi frontale (3), **caractérisé en ce qu'**une pluralité d'évidements (101, 102, 103, 104, 105, 106) sous la forme de rainures est disponible sur la paroi frontale (3) du logement (11) du protège-phare (1), dans lequel chacun desdits évidements (101, 102, 103, 104, 105, 106) s'étend au moins approximativement dans la direction radiale de ladite paroi frontale (3) et le profil, c'est-à-dire la section transversale de chacun des évidements (101, 102, 103, 104, 105, 106), est adapté pour recevoir une partie en forme de tige (81) d'un tournevis ou d'un outil manuel (8) similaire, et dans lequel lesdits évidements (101, 102, 103, 104, 105, 106) sont espacés de la même distance les uns des autres dans une direction circonférentielle dudit logement (11) et convergent dans la zone centrale (30) de la paroi frontale (3) du protège-phare (11).
